# EUROPEAN PATENT SPECIFICATION

(11) **EP 1 152 479 B1**
(45) Date of publication and mention of the grant of the patent: **19.04.2006**
(21) Application number: 00979054.4
(22) Date of filing: 01.12.2000
(51) Int. Cl.: H01Q 1/22, F16B 39/24, H01Q 1/12, B60R 11/00

(54) **ANTENNA MOUNTING NUT**
MONTAGEMUTTER FÜR EINE ANTENNE
ENSEMBLE A ECROU POUR MONTAGE D'ANTENNE

(30) Priority: 07.12.1999 JP 34726899
(43) Date of publication of application: 07.11.2001
(73) Proprietor: Nippon Antena Kabushiki Kaisha, Tokyo 116-0011 (JP)
(72) Inventor: IMAHIGASHI, Hirotsugu Nippon Antena K.K., Warabi-shi, Saitama 335-0001 (JP)
(74) Representative: Grünecker, Kinkeldey, Stockmair & Schwanhäusser Anwaltssozietät
(86) International application number: PCT/JP2000/008527
(87) International publication number: WO 2001/043226

(56) References cited:
- DE-U- 9 202 786
- FR-A- 2 623 021
- JP-A- 8 237 014
- JP-A- 10 084 207
- JP-A- 11 274 825
- JP-B2- 51 015 171
- JP-U- 48 051 958
- JP-U- 60 107 613
- JP-Y1- 45 004 888
- PATENT ABSTRACTS OF JAPAN vol. 1998, no. 05, 30 April 1998 (1998-04-30) & JP 10 022718 A (NIPPON ANTENNA CO LTD), 23 January 1998 (1998-01-23)

## Description

The present invention relates to an antenna-mounting nut according to the preamble part of independent claim 1 for securing an antenna body, which comprises an antenna element, to a vehicle.

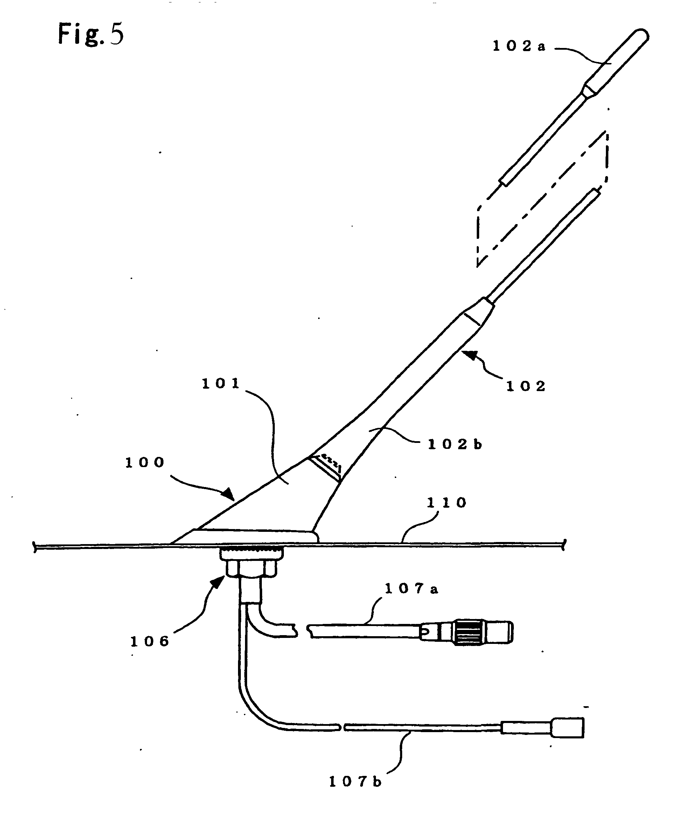

Motor vehicle antennas, which are secured to a panel of a vehicle, are conventionally known. An example of a constitution of a motor vehicle antenna of this kind is shown in Fig. 5. This motor vehicle antenna, with the part that is mounted on the vehicle panel enlarged, is also shown in Fig. 5.

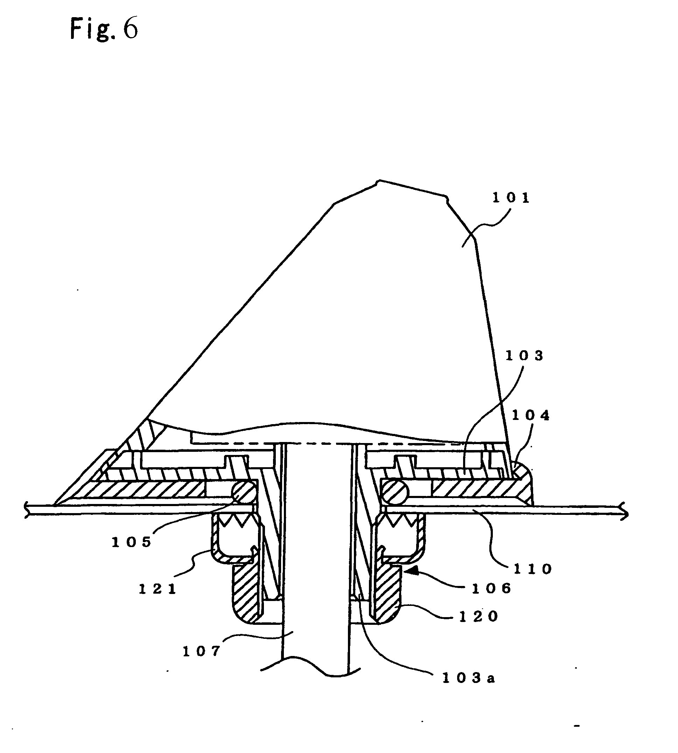

As shown in Figs. 5 and 6, an antenna body. 100 of an automobile antenna comprises an antenna cover 101 and an element portion 102 that is mounted on antenna cover 101, and a base 103 is secured to the lower end of antenna cover 101. A cylindrical protrusion 103a is formed on the lower face of this base 103 so as to protrude therefrom, as shown in Fig. 6, and antenna body 100 is secured by a mounting nut 106 threadedly engaging on this cylindrical protrusion 103a, such that a vehicle panel 110 is interposed therebetween. Here, the base portion of cylindrical protrusion 103a is formed as a rectangular protrusion, and a rectangular antenna-mounting hole is formed in vehicle panel 110, that enables this rectangular protrusion to be inserted therethrough.

Furthermore, an antenna top portion 102a of a diameter that is enlarged with respect to element portion 102 is provided at the upper end of element portion 102. The lower portion of element portion 102 is a molded portion 102b that is molded from a synthetic resin that is soft, such as a rubber. It is preferable for this molded portion 102b to be provided with an internal wave trap coil that is connected to the element.

Further, when the antenna is subj ected to an external force, the soft molded portion 102b of the lower portion of element portion 102 prevents damage to element portion 102, by bending and absorbing the external force applied.

The electrical length from antenna top portion 102a of element portion 102 constituted in this way, to the base end portion of antenna body 100, is, for example, approximately one quarter of an FM radio band wavelength; and the electrical length from the base end portion to the lower end of the wave trap coil, is approximately one quarter of a mobile wireless telephone band wavelength. As a result, in addition to being resonant in a mobile wireless telephone band and the FM radio band, this motor vehicle antenna is capable of receiving radio waves in the AM radio band via the whole area of the antenna body 100.

Signals of this kind, which are transmitted and received by an element portion 102 are guided out by cables 107a, 107b that pass through cylindrical protrusion 103a. Cable 107a is a cable for a mobile wireless telephone and cable 107b is a cable for FM/AM radio.

When securing an antenna body 100 of this kind to a vehicle panel 110, the rectangular protrusion formed on base 103 is inserted into the rectangular antenna-mounting hole formed in vehicle panel 110, and mounting nut 106 is made to mate threadedly with cylindrical protrusion 103a that protrudes from this antenna-mounting hole, and mounting nut 106 is tightened. Antenna body 100 is thus secured such that vehicle panel 110 is interposed therebetween, as shown in Fig. 5.

Further, a base pad 104, which is constituted from a resin that is elastic, is mated with base 103, and an O-ring 105 is inserted so as to mate with cylindrical protrusion 103a. Cylindrical protrusion 103a is then inserted into the antenna-mounting hole. Through the action of this base pad 104 and O-ring 105, rainwater and so forth is prevented from penetrating vehicle panel 110.

Furthermore, mounting nut 106 is constituted from a washer portion of U-shaped cross-section 121 formed with triangular protuberances at the upper end thereof, and from a nut portion 120 that engages threadedly with cylindrical protrusion 103a. Further, when mounting nut 106 is fastened onto cylindrical protrusion 103a, triangular protuberances engage inside the rear face of vehicle panel 110 and base 103 is thus reliably grounded to vehicle panel 110.

Further, so that there is no damage to element portion 102, when collision is made with a rotating brush of a car wash, or the like, when washing the car in a car wash, or when contact is made with the ceiling of a garage or the like when the car is being parked therein, element portion 102 can be made to be removable from antenna cover 101.

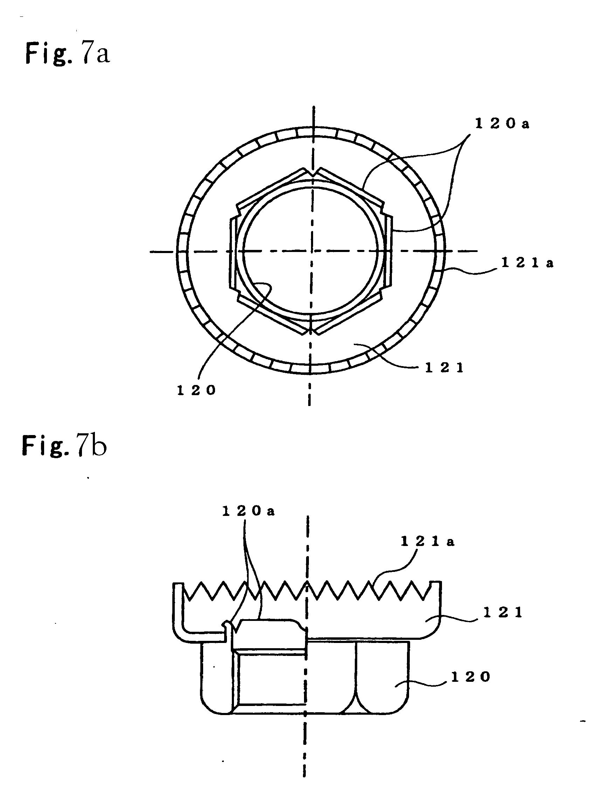

The constitution of the above-mentioned mounting nut 106 that secures antenna body 100 to vehicle panel 110 is shown in detail in Fig. 7.

As shown in Fig. 7, apluralityof triangular protuberances 121a are formed at the upper end of washer portion of U-shaped cross-section 121, and washer portion 121 is caulked to nut portion 120 so as to be integral with nut portion 120. That is, a screw thread is formed in nut portion 120 that engages threadedly with cylindrical protrusion 103a of base 103, and a plurality of caulkingpieces 120a are formed on the upper face of nut portion 120. Further, by placing washer portion 121 on the upper face of nut portion 120 and caulking caulking pieces 120a by means of a caulking tool, nut portion 120 and washer portion 121 are made integral. Here, since six caulking pieces 120a are provided and disposed in a hexagonal shape, washer portion 121 is capable of rotating with nut portion 120. For this reason, when nut portion 120 is fastened onto cylindrical protrusion 103a, triangular protuberances 121a of washer portion 121 rotate, causing stripping of the paint of vehicle panel 110, thus permitting a reliable grounding of base 103.

Problems are posed by the conventional motor vehicle antenna as described above, namely, that, when the vehicle panel where the antenna is mounted is deformed, the gap between mounting nut 106 and vehicle panel 110 changes fractionally, and there is a risk of the press-contacting force of mounting nut 106 weakening. When the press-contacting force of mounting nut 106 weakens in this way, the electrical connection between washer portion 121 and vehicle panel 110 becomes unstable, the grounding becomes unreliable, and a grating sound results.

Additionally, since stress is continually applied to base pad 104 and O-ring 105 by the fastening strength of mounting nut 106, there is a risk that, over the years, the elasticity of base pad 104 and O-ring 105 will weaken under this stress. Similarly here, there is the problem that the press-contacting force of mounting nut 106 weakens, the grounding becomes unreliable, and a grating sound results.

In EP 0 758 802 B1 an antenna-mounting nut is disclosed that engages threadedly, from a reverse side of a vehicle panel with a protrusion on an antenna body, which is inserted into a mounting hole formed in said vehicle panel. Said antenna-mounting nut comprises a washer portion, of U-shaped cross-section, in which a through-hote is formed, and at whose upper end, a plurality of serrate protuberances is formed coming into contact with said vehicle panel; a nut portion, in whose inner peripheral surface a threaded portion and a ring-shaped groove portion are formed, engaging threadedly with said protrusion; and inclined faces of said serrate protuberances are formed facing in a direction in which said nut portion is fastened onto said protrusion.

It is an objective of the present invention to improve an antenna-mounting nut as indicated above so as to be capable of providing an antenna with a reliable grounding, even if a vehicle panel, whereon said antenna is mounted, is deformed.

According to the present invention, the objective is solved by an antenna-mounting nut according to independent claim 1.

According to said claim, a wave washer is interposed between the washer portion and nut portion, meaning that even if the vehicle panel is deformed or the elasticity of the base pad or O-ring weakens, this change can be absorbed by the wave washer, and thus a reduction in the press-contacting force of the antenna-mounting nut can be prevented as far as possible. Further, the inclined faces of the serrate protuberances that are formed at the upper end of the washer portion are formed facing in the direction in which the nut portion is fastened onto the protrusion of the base; thus, during fastening, the antenna-mounting nut rotates smoothly, and, during loosening, since the serrate protuberances engage inside the vehicle panel, the antenna-mounting nut can be prevented from becoming loose.

In the following, the present invention is explained in greater detail by means of an embodiment thereof in conjunction with the accompanying drawings, wherein:
Fig. 1 is an exploded perspective view showing a constitution of a antenna-mounting nut according to an embodiment of the present invention.
Fig. 2 is a figure showing the antenna-mounting nut, according to an embodiment of the present invention, in a state of being assembled.
Fig. 3 is a figure showing a front view, a top view and a partial enlargement of the antenna-mountingnut according to an embodiment of the present invention.
Fig. 4 is a figure showing a motor vehicle antenna mounted on a panel of a vehicle by means of the antenna-mounting nut according to an embodiment of the present invention.
Fig. 5 is a figure showing one example of a constitution of a conventional motor vehicle antenna.
Fig. 6 is a figure showing a conventional motor vehicle antenna with the part that is mounted on the vehicle panel enlarged.
Fig. 7 is a figure showing the constitution of a conventional mounting nut.

The antenna-mounting nut according to an embodiment of the present invention attaches a motor vehicle antenna such that a panel of the vehicle is interposed therebetween, as shown in Fig. 5. Since constitutions excluding that of an antenna-mounting nut of a motor vehicle antenna are assumed to be similar, a description of each of such constitutions is omitted here in favor of the description of an antenna-mounting nut hereinbelow.

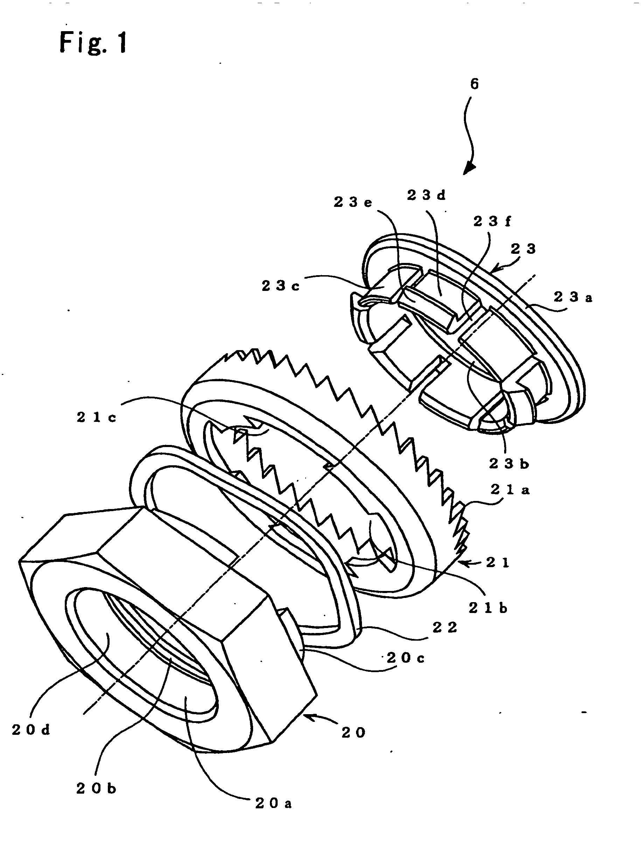

An example of the constitution of a embodiment of the antenna-mounting nut of the present invention is shown in Figs. 1 to 3.

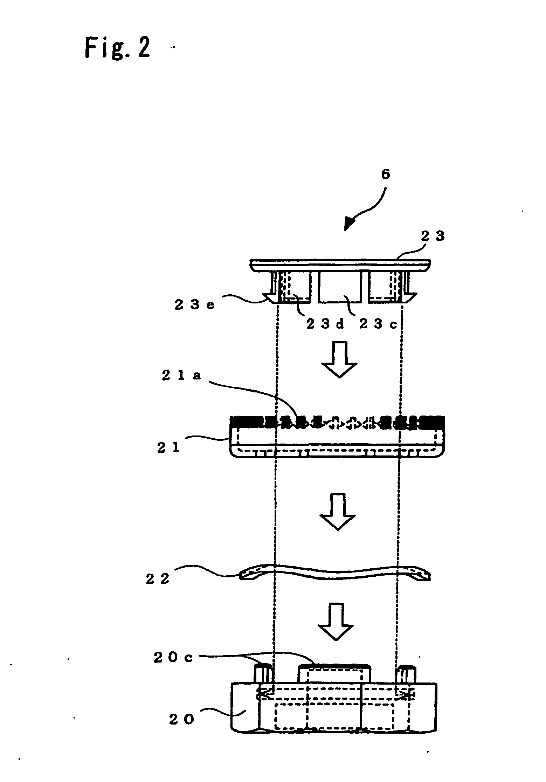

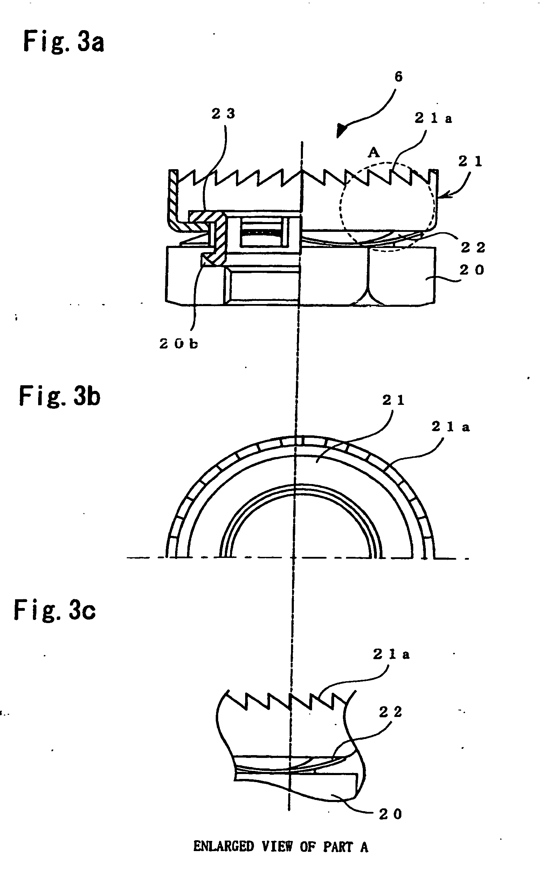

Fig. 1 is an exploded perspective view showing the constitution of a antenna-mounting nut according to an embodiment of the present invention; Fig. 2 is a figure showing the antenna-mounting nut, according to an embodiment of the present invention, in a state of being assembled; Fig. 3(a) is a front view of the antenna-mounting nut of the embodiment of the present invention, Fig. 3(b) is a top view thereof, and Fig. 3(c) is a figure showing a partial enlargement thereof.

As shown in these figures, the antenna-mounting nut 6 according to an embodiment of the present invention is constituted from a nut portion 20 that engages threadedly with a cylindrical protrusion 103a that protrudes from base 103; a washer portion 21 of U-shaped cross-section, on whose upper end edge a plurality of serrate protuberances 21a is formed; a wave washer 22, which has been deformed to assume a wave shape, that is interposed between nut portion 20 and washer portion 21; and a joint portion 23 that secures nut portion 20 and washer portion 21 such that wave washer 22 is interposed therebetween. A threaded portion 20d is formed, inside a first through-hole 20a in nut portion 20, that engages threadedly with a cylindrical protrusion 103a that protrudes from base 103, and a plurality of detent protuberances 20c is formed on the upper face of the nut portion so as to surround threaded portion 20d. Further, a ring-shaped groove portion 20b is formed at the top of first through-hole 20a.

Furthermore, washer portion 21 is formed so as to be of U-shaped cross-section, the upper end edge thereof having a plurality of serrate protuberances 21a formed thereon that engage inside vehicle panel 110, when the washer portion is mounted, a second through-hole 21b being formed in the center thereof. The inclined faces of serrate protuberances 21a are formed facing in the direction in which antenna-mounting nut 6 is fastened, and when antenna-mounting nut 6 is being fastened, serrate protuberances 21a slide over the surface of vehicle panel 110; conversely, when antenna-mounting nut 6 is being loosened, since serrate protuberances 21a engage inside the surface of vehicle panel 110, antenna-mounting nut 6 can be prevented from becoming loose by serrate protuberances 21a. A plurality of protuberance-mating portions 21c are formed so as to face inside second through-hole 21b of washer portion 21. Each of a plurality of detent protuberances 20c formed on nut portion 20 is caused to mate with these protuberance-mating portions 21c.

Furthermore, joint portion 23 comprises a ring-shaped collar portion 23a at the center thereof, in which a third through-hole 23b is formed; and a plurality of first protruding pieces 23c and second protruding pieces 23d that are formed on this collar portion 23a so as to protrude downwards from the circumference of the third through-hole 23b. Grooves 23f that extend as far as third through-hole 23b are formed between this plurality of first protruding pieces 23c and second protruding pieces 23d. Mating protuberances 23e that are tapered and that protrude outwards are also formed at the lower ends of each of second protruding pieces 23d.

Mating protuberances may also be provided at the lower ends of first protruding pieces 23c.

Hereinbelow, by referring to Fig. 2, a state of assembly will be described in which nut portion 20 and washer portion 21 are secured, by joint portion 23, such that wave washer 22 is interposed therebetween. During this assembly, first of all, wave washer 22 is placed on nut portion 20, whereon washer portion 21 is then placed. In this state, as shown in the figure, joint portion 23 is mounted inside washer portion 21. Thereupon, collar portion 23a of joint portion 23 is housed in washer portion 21, and the plurality of first protruding pieces 23c and second protruding pieces 23d of joint portion 23 are passed through second through-hole 21b of washer portion 21 and protrude downwards. Further, by passing this pluralityof first protruding pieces 23c and second protruding pieces 23d through wave washer 22, same are inserted into first through-hole 20a of nut portion 20. Thus, mating protuberances 23e of second protruding pieces 23d mate with ring-shaped groove portion 20b that is formed in first through-hole 20a of nut portion 20.

It is thus possible to secure nut portion 20 and washer portion 21 by means of joint portion 23 such that wave washer 22 is interposed therebetween. Further, at this stage, a plurality of detent protuberances 20c formed on nut portion 20 each mate with protuberance-mating portions 21c of washer portion 21, meaning that nut portion 20 and washer portion 21 rotate without slipping with respect to one another.

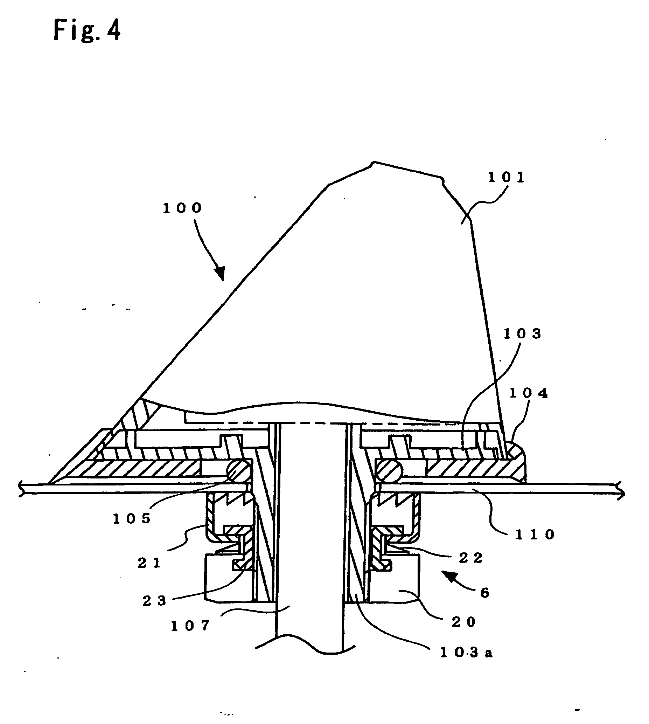

In Fig. 4, a motor vehicle antenna is shown mounted on a vehicle panel 110 by means of the antenna-mounting nut 6 according to the embodiment of the present invention that has a constitution of the kind described above.

As shown in Fig. 4, the cylindrical protrusion 103a formed on base 103 on antenna body 100 is inserted into the rectangular antenna-mounting hole formed in vehicle panel 110, and antenna-mounting nut 6 is made to mate threadedly with cylindrical protrusion 103a that protrudes from this antenna-mounting hole, and antenna-mounting nut 6 is tightened. Antenna body 100 is thus secured such that vehicle panel 110 is interposed therebetween, as shown in Fig. 4.

A base pad 104, which is constituted from a resin that is elastic, is mated with base 103, and an O-ring 105 is inserted so as to mate with cylindrical protrusion 103a. Cylindrical protrusion 103a is then inserted into the antenna-mounting hole. This base pad 104 is glued to vehicle panel 110, and, by the action of ring 105, rainwater and so forth is prevented from penetrating vehicle panel 110 from the outside.

Further, antenna-mounting nut 6 is provided with a washer portion of U-shaped cross-section 21 formed with serrate protuberances 21a on the upper end edge thereof, and this washer portion 21 is constructed so as to rotate with nut portion 20. As a result, when antenna-mounting nut 6 is fastened onto cylindrical protrusion 103a, both nut portion 20 and washer portion 21 rotate, causing stripping of the paint on the rear surface of vehicle panel 110 by serrate protuberances 21a of [the washer portion]. Further, since serrate protuberances 21a engage inside the part of the vehicle panel from which paint has been stripped, the base 103 becomes reliably grounded to vehicle panel 110 via antenna-mounting nut 6.

When securing antenna body 100 to vehicle panel 110 by means of a antenna-mounting nut 6 of this kind according to the embodiment of the present invention, when vehicle panel 110 is deformed, even if the gap between antenna-mounting nut 6 and vehicle panel 110 changes fractionally, this change can be absorbed by wave washer 22 that is interposed between nut portion 20 and washer portion 21, and thus a reduction in the press-contacting force of antenna-mounting nut 6 can be prevented as far as possible. It is thereby possible to stabilize the electrical connection between washer portion 21 and vehicle panel 110, and to prevent the grounding from becoming unreliable and the resulting grating sound.

Furthermore, even if the elasticity of base pad 104 and O-ring 105 weakens over the years, this change is similarly absorbed by wave washer 22, which is interposed between nut portion 20 and washer portion 21. As a result, it is possible to stabilize the electrical connection between washer portion 21 and vehicle panel 110, and to prevent the grounding from becoming unreliable and the resulting grating sound.

In addition, the inclined faces of the serrate protuberances 21a described above are formed facing in the direction in which antenna-mounting nut 6 is fastened, and when antenna-mounting nut 6 is being fastened, serrate protuberances 21a slide over the surface of vehicle panel 110; conversely, when antenna-mounting nut 6 is being loosened, since serrate protuberances 21a engage inside the surface of the vehicle panel, antenna-mounting nut 6 can be prevented from becoming loose by serrate protuberances 21a.

On account of the constitution described above, with the antenna-mounting nut industrially applied, a wave washer is interposed between the washer portion and nut portion, meaning that even if the vehicle panel is deformed or the elasticity of the base pad or O-ring weakens, this change can be absorbed by the wave washer, and thus a reduction in the press-contacting force of the antenna-mounting nut can be prevented by the present invention as far as possible. Further, the inclined faces of the serrate protuberances that are formed on the upper end of the washer portion are formed facing in the direction in which the nut portion is fastened onto the protrusion of the base; thus, during fastening, the antenna-mounting nut rotates smoothly, and, during loosening, since the serrate protuberances engage inside the vehicle panel, the antenna-mounting nut can be prevented from becoming loose.

## Claims

1. An antenna-mounting nut (6), that engages threadedly, from a reverse side of a vehicle panel (110), with a protrusion (103a), on an antenna body (100), which is inserted into a mounting hole formed in said vehicle panel (110), comprising:
a washer portion (21), of U-shaped cross-section, in which a through-hole (21b) is formed, and at whose upper end, a plurality of serrate protuberances (21a) is formed coming into contact with said vehicle panel (110);
a nut portion (20), in whose inner peripheral surface a threaded portion (20d) and
a ring-shaped groove portion (20b) are formed, engaging threadedly with said protrusion (103a); and
inclined faces of said serrate protuberances (21) are formed facing in a direction in which said nut portion (20) is fastened onto said protrusion (103a),
**characterized in that**
the through-hole (21b) is formed with protuberance mating portions (21c);
detent protuberances (20c) are formed so as to protrude from an upper surface of the nut portion (20);
a joint portion (23) comprises a collar portion (23a);
the joint portion (23) has a plurality of protruding pieces (23c, 23d), being formed so as to protrude from the circumference of a through-hole (23b) formed in this collar portion (23a) and at whose tips mating protuberances (23e) are formed;
a ring-shaped wave washer (22) has been formed as a wave shape;
the protuberance-mating portions (21c) on said washer portion (21) being mated with said detent protuberances (20c) on said nut portion (20) such that said wave washer (22) is interposed therebetween, so that said washer portion (21) and said nut portion (20) do not rotate with respect to one another.
said collar portion (23a) on said joint portion (23) comes into contact with the upper surface of the inside of said washer portion (21), and said plurality of protruding pieces (23c, 23d) passing through said through-hole (21b) of said washer portion (21), said mating protuberances (23e) being thereby mated with said ring-shaped groove portion (20b) in said nut portion (20); and
said washer portion (21) and said nut portion (20) are secured by said joint portion (23).

## Patentansprüche

1. Antennenanbringungsmutter (6), die von einer Rückseite eines Fahrzeugblechs (110) her in Gewindeeingriff mit einem Vorsprung (103) an einem Antennenkörper (100) kommt, der in ein Anbringungsloch eingeführt ist, das in dem Fahrzeugblech (110) ausgebildet ist, wobei sie umfasst:
einen Scheibenabschnitt (21) mit U-förmigem Querschnitt, in dem ein Durchgangsloch (21b) ausgebildet ist und an dessen oberem Ende eine Vielzahl gezahnter Vorsprünge (21a) ausgebildet sind, die mit dem Fahrzeugblech (110) in Kontakt kommen;
einen Mutternabschnitt (20), in dessen Innenumfangsfläche ein Gewindeabschnitt (20d) und ein ringförmiger Nutabschnitt (20b) ausgebildet sind und der in Gewindeeingriff mit dem Vorsprung (103) kommt; und
wobei geneigte Flächen der gezahnten Vorsprünge (21) in einer Richtung gerichtet ausgebildet sind, in der der Mutternabschnitt (20) auf dem Vorsprung (103a) befestigt wird,
**dadurch gekennzeichnet, dass**
das Durchgangsloch (21b) mit Vorsprungs-Passabschnitten (21c) versehen ist;
Arretiervorsprünge (20c) so ausgebildet sind, dass sie von einer oberen Fläche des Mutternabschnitts (20) vorstehen;
ein Verbindungsabschnitt (23) einen Bundabschnitt (23a) umfasst;
der Verbindungsabschnitt (23) eine Vielzahl vorstehender Teile (23c, 23d) aufweist, die so ausgebildet sind, dass sie vom Umfang eines Durchgangslochs (23b) vorstehen, das in diesem Bundabschnitt (23a) ausgebildet ist, und an deren vorderen Enden Passvorsprünge (23e) ausgebildet sind;
eine ringförmige Wellenscheibe als eine Wellenform ausgebildet worden ist;
die Vorsprungs-Passabschnitte (21c) an dem Scheibenabschnitt (21) mit den Arretiervorsprüngen (20c) an dem Mutternabschnitt (20) so zusammengepasst sind, dass die Wellenscheibe (22) dazwischen angeordnet ist, so dass der Scheibenabschnitt (21) und der Mutternabschnitt (20) sich nicht zueinander drehen,
der Bundabschnitt (23a) an dem Verbindungsabschnitt (23) in Kontakt mit der oberen Fläche der Innenseite des Scheibenabschnitts (21) kommt und die Vielzahl vorstehender Teile (23c, 23d) durch das Durchgangsloch (21b) des Scheibenabschnitts (21) hindurchtreten und die Passvorsprünge (23e) so mit dem ringförmigen Nutabschnitt (20b) in dem Mutternabschnitt (20) zusammengepasst werden; und
der Scheibenabschnitt (21) und der Mutternabschnitt (20) durch den Verbindungsabschnitt (23) befestigt werden.

## Revendications

1. Ensemble à écrou pour montage d'antenne (6), qui s'engage par filetage à partir d'un côté arrière d'un panneau de véhicule (110), avec une protubérance (103a), sur un corps d'antenne (100), qui est inséré dans un trou de montage formé dans ledit panneau de véhicule (110), comprenant :
une partie de rondelle (21) ayant une section transversale en forme de U dans laquelle est formé un trou passant (21b) et à l'extrémité supérieure de laquelle est formée une pluralité de protubérances striées (21a) venant en contact avec ledit panneau de véhicule (110) ;
une partie d'écrou (20) dans la surface périphérique intérieure de laquelle sont formées une partie filetée (20d) et une partie de rainure en forme d'anneau (20b) s'engageant par filetage dans ladite protubérance (103a) ; et
des faces inclinées desdites protubérances striées (21a) sont formées, orientées dans une direction dans laquelle ladite partie d'écrou (20) est fixée sur ladite protubérance (103a),
**caractérisé en ce que**
le trou passant (21b) est formé avec des parties s'adaptant aux protubérances (21c) ;
des protubérances d'encliquetage (20c) sont formées de manière à faire saillie à partir d'une surface supérieure de la partie d'écrou (20) ;
une partie de joint (23) comprend une partie de collier (23a) ;
la partie de joint (23) comprend une pluralité d'éléments protubérants (23c, 23d) formés de manière à faire saillie à partir de la circonférence d'un trou passant (23b) formé dans cette partie de collier (23a) et aux extrémités desquels sont formées des protubérances correspondantes (23e) ;
une rondelle ondulée en forme d'anneau (22) est formée en forme de vague ;
les parties s'adaptant aux protubérances (21c) sur ladite partie de rondelle (21) étant adaptées auxdites protubérances d'encliquetage (20c) sur ladite partie d'écrou (20) de sorte que ladite rondelle ondulée (22) est intercalée entre celles-ci, de sorte que ladite partie de rondelle (21) et ladite partie d'écrou (20) ne tournent pas l'une par rapport à l'autre ;
ladite partie de collier (23a) sur ladite partie de joint (23) vient en contact avec la surface supérieure de l'intérieur de ladite partie de rondelle (21), et ladite pluralité d'éléments protubérants (23c, 23d) passant à travers ledit trou passant (21b) de ladite partie de rondelle (21), lesdites protubérances correspondantes (23e) étant ainsi en correspondance avec ladite partie de rainure en forme d'anneau (20b) dans ladite partie d'écrou (20) ; et
ladite partie de rondelle (21) et ladite partie d'écrou (20) sont fixées par ladite partie de joint (23).
